Europäisches Patentamt

European Patent Office

Office européen des brevets

(11) Publication number: **0 457 352 A1**

## EUROPEAN PATENT APPLICATION

(21) Application number: 91108053.9

(51) Int. Cl.⁵: **B01J 8/02**, B01D 53/14

(22) Date of filing: 17.05.91

(30) Priority: 18.05.90 PL 285255

(43) Date of publication of application:
21.11.91 Bulletin 91/47

(84) Designated Contracting States:
AT DE FR GB IT

(71) Applicant: **INSTYTUT CHEMII NIEORGANICZNEJ**
**ul. Sowinskiego 11**
**PL-44-101 Gliwice(PL)**

(72) Inventor: **Sztaba, Ryszard**
**ul. Zamenhofa 58/6**
**PL-41-800 Zabrze(PL)**
Inventor: **Gosiewski, Krzysztof**
**ul. Mlodych Patriot w 4/15**
**PL-44-100 Gliwice(PL)**

(74) Representative: **Füchsle, Klaus, Dipl.-Ing. et al**
**Hoffmann . Eitle & Partner Patentanwälte**
**Arabellastrasse 4**
**W-8000 München 81(DE)**

(54) Reactor with internal heat exchange and with a solid catalyst.

(57) The invention relates to a reactor with internal heat exchange and with a solid catalyst particularly suited for carrying out an exothermic reaction and is provided with two spaces (1, 2) which are separated by means of a membrane through which the heat passes from the one space into the other. The same reaction medium of the varied stages of conversion flows into both spaces the medium exchanging the heat through the membrane, and the one space /1/ and the second space /2/ are filled with the grains of a catalyst or with the grains of a catalyst together with the grains of a non-active substance.

Fig. 1

The subject of the present invention is the reactor with internal heat exchange and with a solid catalyst, particulary suited for carrying out exothermic reactions. The reactors being hitherto applicable for such cases are most frequently in the form of tubular rectors which are filled with a solid catalyst. It is usually necessary for the exothermic reaction that reacting substances are preheated at least to the so-called "ignition temperature of the reaction". The said preheating is carried out by the application of the outer heat-exchange systems. Most frequently the said systems take the reaction heat from the medium at the outlet of the reactor, recycling it into the system by way of heating up the inlet medium. There are also known the reactors which are characteristic by the inner removal of the reaction heat, most frequently in the form of multi-tubular reactors in which a cooling medium, being usually in the liquid stage, flows between the tubes of the reactor which are filled with the grains of a catalyst. Such solutions, being provided with the inner as well as with the outer exchange of heat, are known from the most basic literature related to chemical engineering /J.Ciborowski "In żynieria Chemiczna i Procesowa" /Chemical and Process Engineering/, chap. 7 or W.Brotz "Podstawy in żynierii reakcji chemicznych" /Foundations of the Chemical Reaction Engineering/ and have very wide range of specialistic references.

The solutions for the reactors with internal heat exchange are advantageous as related to the solutions with the outer system of exchangers which consist in obtaining the more preferable distribution of temperatures into the reactor, or in the case of the strongly exothermic reactions, wherein large quantities of heat are released in the course of the reaction, they enable the higher conversion of the reacting substances to be obtained. These solution are disadvantageous because of the low heat-transfer coefficients at the intertubular space, what results in the low intensity of the heat exchange. To this end a medium in the liquid stage is applied as a heat-receiving agent. There are also applicable special solutions enhancing the intensity of the heat exchange into the intertubular space of reactors /Polish patent No. 126.956/ and they consist in the application of plates which are provided with the holes into the inter-tubular space increasing the turbulence in the vioinity of the tubes.

In multi-tubular reactors it has been experimentally proved that the convective heat-transfer coefficients in the tubes being filled with the grains of a catalyst are many times higher than those which would occur into an analogous non-filled tube.

The aim of the present invention is to solve the design of the inner heat-exchange reactor which would anable the heat of the reaction be used for preheating the reacting substances in order to improve the autothermic exchange of the process heat and to simultaneously attain the intensive exchange of heat through the inner membrane of the reactor. This aim has been achieved in such a manner that at the both sides of the inner membrane of the reactor there flows the reaction medium which participates in the reaction, whereas the intensity of the process of the convective heat transfer into the membrane from the both sides thereof is attained by filling the both spaces, i.e. the heat-releasing and the heat-receiving one, with the granular material. In a particular case, in the both spaces, these may be the grains of a catalyst so as to enable the reaction between the reacting substances in the both spaces.

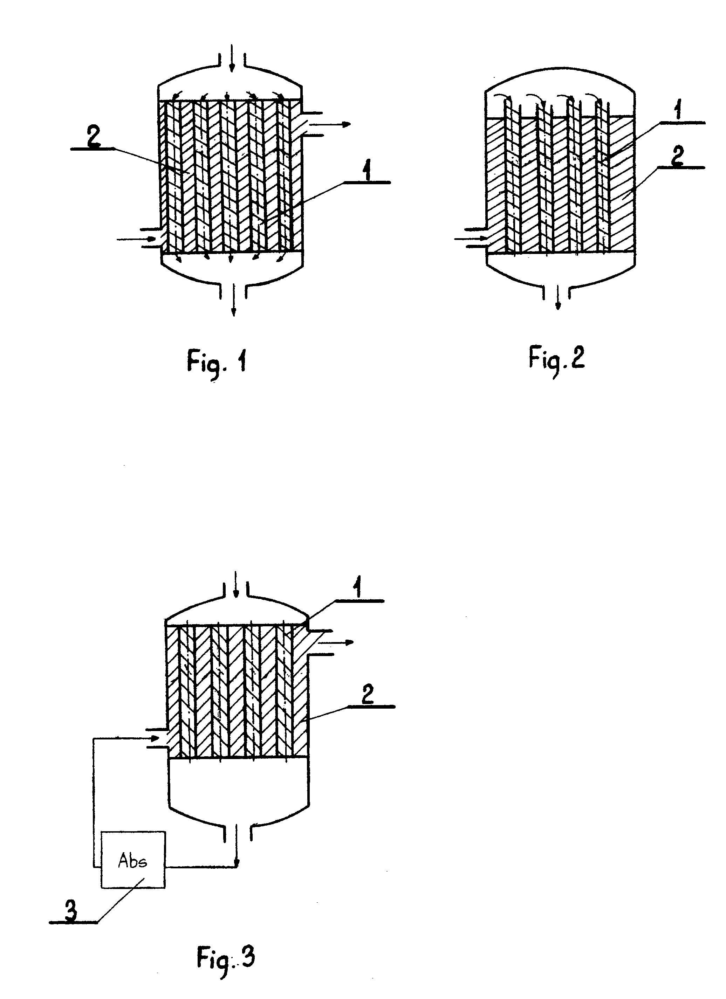

The embodiment of the present invention has been shown in Fig. 1-3. In Fig. 1 a diagram of the multi-tubular reactor is shown, wherein the heat-releasing space is an intratubular space 1 of the reactor, being filled with the grains of a catalyst, whereas the heat-receiving space is an intertubular space 2, being filled with the granular material, wherethrough there flows a heat carrier which cools up the reaction space of the reactor and which is the reaction medium. A variation of the reactor with the autothermic heat exchange has been shown in Fig. 2, wherein the reaction medium is first of all fed into intertubular space 2, being filled with the non-active granular material or the grains of a catalyst, and then the said medium, after being heated up with the heat as exchanged from the intratubular space and possibly, in addition, with the reaction heat, is fed inside intratubular space 1 wherein the reaction is further carried out.

Another variation of the reactor as per the present invention has been exemplified in Fig. 3, wherein the two-stage reactor is shown, being provided with the inter-stage absorption of the reaction product. The reaction medium is fed into the one space of the reactor, for instance, into intertubular space 2, being filled with a catalyst or with the layers of the non-active filling and the catalyst, whereafter, when partially reacted out, it is released from the said space and fed into an inter-stage absorber 3 of the reaction product and then it is fed into the other reaction space of the reactor, for instance, into intratubular space being also filled up with the catalyst or with the layers of the non-active filling and the catalyst, wherein the reacting substances are further on reacted out. The both spaces 1 and 2 are separated by means of a membrane which into the example of embodiment are the walls of the said tubes, wherethrough there passes the stream of the heat being exchanged between the both spaces.

Reference signs in the claims are intended for better understanding and shall not limit the scope.

## Claims

1. The reactor with internal heat exchange and with a solid catalyst, particularly suited for carrying out an exothermic reaction, provided with the two spaces, being separated by means of a membrane wherethrough there passes the heat from the one space into another, characterized in that into the both spaces there flows the same reaction medium of the varied stages of conversion, said medium exchanging the heat through the said membrane, whereas one space /1/ and second space /2/ are filled with the grains of a catalyst or with the grains of a catalyst together with the grains of a non-active substance.

2. The reactor acc. To Claim 1, characterized in that the reaction medium as fed into one of the spaces /1/ or /2/ of he reactor, after being discharged therefrom, is directly or via an absorber /3/ supplied to the other one of the two spaces.

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 127 561 (C.V.HERRMANN) <br> * column 1, line 1 - line 9 * * column 2, line 55 - column 3, line 9 @ column 3, line 28 - column 4, line 25 @ figures 1,2 * | 1,2 | B 01 J 8/02 <br> B 01 D 53/14 |
| A | US-A-2 371 181 (R.H.NEWTON) <br> * column 1, line 1 - line 9 * * column 2, line 31 - column 3, line 19 * * column 3, line 52 - column 4, line 8 * * claim 1; figures 1,2 * | 1,2 | |
| A | EP-A-0 330 751 (UHDE) <br> * abstract * * column 3, line 43 - column 4, line 19 * * figure * | 1,2 | |

TECHNICAL FIELDS SEARCHED (Int. Cl.5)

B 01 J

The present search report has been drawn up for all claims

| Place of search | Date of completion of search | Examiner |
|---|---|---|
| The Hague | 26 August 91 | STEVNSBORG N. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document